# EUROPÄISCHE PATENTSCHRIFT

(11) **EP 1 588 876 B1**
(45) Veröffentlichungstag und Bekanntmachung des Hinweises auf die Patenterteilung: **02.07.2008**
(21) Anmeldenummer: 05008347.6
(22) Anmeldetag: 18.04.2005
(51) Int. Cl.: B60H 1/32, B60H 1/00

(54) **Verfahren und Vorrichtung zur Trocknung eines Verdampfers und Verfahren zur Steuerung einer Klimaanlage**
Method and device for drying an evaporator and method for controlling an air condtitioning system
Procédé et installation de séchage d'un évaporateur et procédé de contrôle d'une climatisation

(30) Priorität: 19.04.2004 DE 102004019439
(43) Veröffentlichungstag der Anmeldung: 26.10.2005
(73) Patentinhaber: Behr GmbH & Co. KG, 70469 Stuttgart (DE)
(72) Erfinder: Baruschke, Wilhelm, Dipl.-Ing., 73117 Wangen (DE); Britsch-Laudwein, Armin, 71272 Renningen (DE); Liermann, Andreas, Dipl.-Ing. (FH), 67117 Limburgerhof (DE); Lochmahr, Karl, Dipl.-Ing. (FH), 71665 Vaihingen (DE)

(56) Entgegenhaltungen:
- EP-A- 0 656 273
- FR-A- 2 814 119
- US-A- 5 385 028
- US-A1- 2004 050 086
- PATENT ABSTRACTS OF JAPAN Bd. 014, Nr. 247 (M-0978), 25. Mai 1990 (1990-05-25) & JP 02 068213 A (NIPPON DENSO CO LTD), 7. März 1990 (1990-03-07)

## Beschreibung

Die Erfindung betrifft ein Verfahren sowie eine Vorrichtung zur Trocknung eines Verdampfers einer Klimaanlage und ein Verfahren zur Steuerung einer Klimaanlage in Kombination mit einer Verdampfertrocknung.

Zur Verbesserung der Innenraumbehaglichkeit und des thermischen Komforts in einem Fahrzeug wird im Allgemeinen ein Klimatisierungssystem (auch Klimaanlage genannt) verwendet, das zumindest aus einem Heiz- und Kältemittelkreislauf, einem Klimagerät und einem Luftkreislauf gebildet ist, wie in der Gattungsgemäßen FR 2 814 119 offenbart. Bekannt sind auch kombinierte Einrichtungen, die wahlweise das Kühlen oder Erwärmen eines geschlossenen Raumes, insbesondere eines Innenraumes eines Fahrzeugs, ermöglichen.

Dabei wird ein der Betriebsart "Kühlen" der Klimaanlage zugrunde liegender Kreisprozess, insbesondere ein Kaltemittelkreislauf, zum Betrieb der Klimaanlage in der Betriebsart "Heizen" umgekehrt ausgeführt, so dass die Einrichtung auch als Wärmepumpe fungiert Jede Kältemaschine, also z. B. eine Klimaanlage, umfasst einen Verdampfer, mit dem Kälte durch Verdampfen niedrig siedender Flüssigkeiten oder verflüssigter Gase (Kältemittel) erzeugt wird. Jede Wärmepumpe umfasst einen Kondensator oder Gaskühler (im Folgenden der Einfachheit halber als Gaskühler bezeichnet), mit dem einem komprimierten Medium, z. B. einem Kältemittel, die enthaltene Wärmeenergie entzogen wird.

Bei einer kombinierten Kühl- und Heizeinrichtung tauschen Verdampfer und Gaskühler je nach Betriebsart ihre Funktion, d. h. ein Element der Kühl- und Heizeinrichtung, das bei deren Betrieb als Klimaanlage als Verdampfer fungiert, fungiert bei deren Betrieb als Wärmepumpe als Gaskühler. Entsprechend fungiert ein Element der Kühl- und Heizeinrichtung, das bei deren Betrieb als Klimaanlage als Gaskühler fungiert, bei deren Betrieb als Wärmepumpe als Verdampfer. Des Weiteren muss bei einer solchen kombinierten Kühl- und Heizeinrichtung je nach Betriebsart die Anordnung des Drosselventils im Prozess angepasst werden. Für solche kombinierten Kühl- und Heizeinrichtungen ist die Verwendung eines Kältemittels erforderlich, das nennenswerte Heizleistungen der Wärmepumpe zulässt.

Von Klimaanlagen oder kombinierten Kühl- und Heizeinrichtungen ist bekannt, dass sich die gesamte in den geschlossenen Raum eingetragene Feuchtigkeit am Verdampfer sammelt. Bei einer Prozessumkehr, also bei einem Betrieb einer kombinierten Kühl- und Heizeinrichtung zunächst als Klimaanlage und danach als Wärmepumpe wirkt sich die Feuchtigkeit des dann als Gaskühler fungierenden Verdampfers nachteilig aus. Ein nasser Gaskühler bewirkt eine Verteilung der Feuchtigkeit in dem geschlossenen Raum, was im Falle eines Fahrzeuginnenraums zu einem störenden, im Einzelfall sogar gefährlichen, weil sichthindemden Scheibenbeschlag, so genanntem "Flash-Fog", führt.

Zur Vermeidung von unerwünschtem Scheibenbeschlag sind unterschiedliche Ansätze bekannt geworden. Ein erster Ansatz basiert auf einem zusätzlichen Gaskühler für die Wärmepumpe. Ein anderer Ansatz versucht den Scheibenbeschlag dadurch zu vermeiden, indem bei drohendem Scheibenbeschlag in einem Kraftfahrzeug die Luftverteilung oder der Luftstrom derart geändert wird, dass die feuchte Luft hauptsächlich in den Fußraum des Fahrzeuginnenraums gelangt Zur Vermeidung von Scheibenbeschlag ist eine alleinige Beeinflussung der Luftverteilung jedoch oftmals nicht ausreichend. Zudem wird durch diese Maßnahme das Komfortempfinden nicht verbessert.

Diese bekannten Lösungsvorschläge sind insofern noch nicht optimal, als sich für den gemäß dem ersten Ansatz zusätzlich erforderlichen Gaskühler Mehrkosten für das Element an sich und für die damit insgesamt komplexere Schaltung sowie ein erhöhter Platzbedarf der Gesamteinrichtung ergeben. Des Weiteren ist auch versucht worden, den Verdampfer zu trocknen. Ein bekannt gewordener Vorschlag zur Trocknung des Verdampfers basiert auf Zeolithen. Die davon erforderlichen Mengen (mehr als 2,5 kg) müssen im Fahrzeug mitgeführt werden, was in ungünstiger Weise das Gesamtgewicht des Fahrzeugs und damit den Kraftstoffverbrauch erhöht. Zudem ist die Regeneration der Zeolithe ungeklärt.

Die kombinierte Kühl- und Heizeinrichtung wird im Folgenden auch als Klimaanlage bezeichnet. Bei dem geschlossenen Raum handelt es sich insbesondere um einen Innenraum eines Fahrzeugs.

Der Erfindung liegt die Aufgabe zugrunde, ein Verfahren zur Trocknung eines Verdampfers einer Klimaanlage, insbesondere nach dem Abstellen eines Fahrzeugs, zur Verfügung zu stellen. Des Weiteren ist ein besonders einfaches Verfahren zur Steuerung einer Klimaanlage in Kombination mit einer Verdampfertrocknung anzugeben.

Die Aufgabe hinsichtlich des Verfahrens zur Trocknung eines Verdampfers wird gelöst durch die Merkmale des Anspruchs 1. Die hinsichtlich des Verfahrens zur Steuerung der Klimaanlage gestellte Aufgabe wird gelöst durch die Merkmale des unabhängigen Anspruchs 17.

Vorteilhafte Ausgestaltungen der Erfindung sind Gegenstand der Unteransprüche.

Beim Verfahren zur Trocknung eines Verdampfers einer Klimaanlage eines Fahrzeugs, insbesondere nach Abstellen des Fahrzeugs, wird erfindungsgemäß ein in einem Kältemittelkreislauf primärseitig angeordneter Verdampfer mit einer Restwärme eines Heizers in Abhängigkeit von der Kühlwassertemperatur, der momentanen Kapazität einer Batterie und/oder vom Ladezustand einer Batterie beaufschlagt. Dabei umfasst die Klimaanlage, als eine kombinierte Kühl- und Heizeinrichtung, ein Klimagerät mit einem in einem Kältemittelkreislauf angeordneten Kältemiftelverdichter, einen Gaskühler und einen Verdampfer zur Klimatisierung einer in einem Luftkreislauf geführten Luft, wobei im Luftkreislauf ein Gebläse und ein Heizer angeordnet sind. Für eine möglichst einfache und zusätzliche Komponenten vermeidende Trocknung des Verdampfers wird die von dem Heizer abgegebene Wärme zur Trocknung des Verdampfers verwendet. Hierbei wird der Verdampfer insbesondere sekundärseitig als Restwärme mit über den Heizer geführter und aufgeheizter Luft beaufschlagt

In einer möglichen Ausgestaltung des Verfahrens wird zur Aufheizung der Luft die Luftströmungsnchtung innerhalb der Klimaanlage umgekehrt, so dass Luft aus dem zu klimatisierenden Raum zuerst über den Heizer und anschließend über den Verdampfer geleitet wird. Die Luft wird erwärmt, wenn sie über den Heizer strömt Anschließend strömt die erwärmte Luft über den feuchten Verdampfer. Da die Fähigkeit von Luft, Feuchtigkeit auf zunehmen mit der Temperatur steigt, wird der Verdampfer hierdurch getrocknet.

Zweckmäßigerweise wird zur Umkehrung der Luftströmungsrichtung die Drehrichtung eines Gebläses umgekehrt. Da jede Klimaanlage in ihrer Luftführung ein Gebläse zur Luftumwälzung aufweist, kann dieses auch für die Verdampfertrocknung verwendet werden, indem seine Drehrichtung und damit die Luftströmungsrichtung umgekehrt wird. Hierdurch kann auf weitere Bauteile verzichtet werden, so dass keine zusätzlichen Kosten entstehen.

Viele Fahrzeuge sind für eine bessere Fondraumdurchströmung bereits mit einem so genannten Boostergebläse ausgestattet. Dieses Boostergebläse ist in Kanälen zwischen dem Luftverteilkasten des Klimagerätes und beispielsweise in den Belüftungsdüsen in den B-Säulen angeordnet Daher ist in einer vorteilhaften Weiterbildung der Erfindung vorgesehen, dass zur Umkehrung der Luftströmungsrichtung die Drehrichtung eines solchen, zur Fondsraumdurchströmung vorgesehenen Boostergebläses umgekehrt wird. Wiederum kann auf ein zusätzliches Gebläse verzichtet werden, wodurch die Durchführung des Verfahrens annähernd kostenneutral ist.

Dennoch ist es selbstverständlich möglich und ebenfalls Gegenstand der vorliegenden Erfindung, dass zur Umkehrung der Luftströmungsnehtung ein dafür vorgesehenes Zusatzgebläse eingeschaltet wird. Die Verwendung eines Zusatzgebläses ist zwar mit erhöhten Kosten verbunden, kann aber in einigen Fällen zu einer effektiveren und schnelleren Verfahrensdurchführung beitragen.

Wenn der Verdampfer getrocknet wird, erhöht sich die Feuchtigkeit der Luft. Diese Luftfeuchtigkeit muss aus dem zu klimatisierenden Raum abgeführt werden, damit Scheibenbeschlag wirksam verhindert wird. Insbesondere dann, wenn zur Durchführung des Verfahrens die Luftströmungsnchtung innerhalb der Klimaanlage umgekehrt wird, so dass Luft aus dem zu klimatisierenden Raum zuerst über den Heizer und anschließend über den Verdampfer geführt wird, hat es sich als vorteilhaft erwiesen, die Luft über eine Lufteintritts- oder Luftaustrittsöffnung der Klimaanlage aus dem zu klimatisierenden Raum abzuführen. Hierdurch müssen keine separaten Entlüftungskanäle oder -öffnungen vorgesehen werden, die zusätzliche Kosten verursachen wurden.

Je nach Funktion und Aufbau der Klimaanlage kann das Verfahren zur Trocknung des Verdampfers manuell durch einen Bedienereingriff gestartet werden. D. h. der Verdampfer wird nicht permanent mit Restwärme beaufschlagt, sondern nur nach einem Bedienereingriff. Zweckmäßigerweise wird die Durchführung des Verfahrens jedoch von der Klimaanlage gesteuert, so dass das Verfahren zur Trocknung des Verdampfers Teil des Verfahrens zur Steuerung der Klimaanlage ist.

In einer weiteren Ausgestaltung der Erfindung wird der Verdampfer mit Restwärme in Abhängigkeit von der Ist-Feuchtigkeit und/oder der Ist-Temperatur nach dem Verdampfer beaufschlagt Mittels der Beaufschlagung des Verdampfers mit Restwärme des Heizers wird der Verdampfer getrocknet, insbesondere mit heißer Luft durchströmt, deren Zufuhr in Abhängigkeit von der Ist-Feuchtigkeit und/oder der Ist-Temperatur nach dem Verdampfer gesteuert wird. Dazu wird zunächst die Ist-Feuchtigkeit und/oder die Ist-Temperatur nach dem Verdampfer ermittelt, anschließend wird die ermittelte Ist-Feuchtigkeit und/oder Ist-Temperatur mit einem vorgebbaren Sollwert für die Feuchtigkeit bzw. für die Temperatur verglichen und beim Überschreiten mindestens einer der Sollwerte der Verdampfer automatisch mit Restwärme des Heizers beaufschlagt und somit getrocknet Hierdurch wird das Verfahren zur Trocknung des Verdampfers als Teil des Verfahrens zur Steuerung der Klimaanlage immer dann durchgeführt, wenn dies notwendig ist, um Scheibenbeschlag zu verhindern oder maximale Heizleistung sicherzustellen.

Um eine die Betriebsfunktion des Verfahrens zur Trocknung des Verdampfers sicherstellende Batterie, insbesondere eine Bordnetzbatterie, nicht fortlaufend zu belasten, wird der Verdampfer mit Restwärme zeitlich begrenzt beaufschlagt. Insbesondere bei einer Durchführung der Verdampfertrocknung nach Fahrende eines Fahrzeugs sollte der Verdampfer nur so lange getrocknet werden, dass zum einen mittels der Batterie ein Neustart des Fahrzeugs sichergestellt werden kann und zum anderen ein Scheibenbeschlag aufgrund von Feuchte in der klimatisierten Luft möglichst gut vermieden wird.

Von besonderer Bedeutung ist es, das Verfahren zur Trocknung des Verdampfers nach Fahrende durchzuführen, da sich durch den vorangegangenen Klimatisierungsbetrieb, wie bereits erläutert, die Feuchtigkeit der Innenraumluft am kalten Verdampfer niederschlägt. Bei einer nachfolgenden Fahrt, bei der möglicherweise sofort eine hohe Heizleistung abgefordert wird, würde die vorhandene Feuchtigkeit unweigerlich zum Scheibenbeschlag führen. Daher ist in einer vorteilhaften Ausgestaltung der Erfindung vorgesehen, dass das Verfahren zur Trocknung des Verdampfers gestartet wird, wenn das Fahrzeug abgestellt und der Motor ausgeschaltet ist

Zur Komfortsteigerung ist es vorteilhaft, das Verfahren zur Trocknung des Verdampfers nach dem Abstellen des Fahrzeugs mit Zeitverzögerung zu starten, damit der Fahrer des Autos hiervon nicht belästigt wird.

In manchen Fällen, etwa bei einem Kurzstopp, beispielsweise an einer Tankstelle, ist es nicht sinnvoll, das Verfahren zur Trocknung des Verdampfers unmittelbar oder mit Zeitverzögerung zu starten. Für solche Fälle ist in einer weiteren vorteilhaften Ausgestaltung der Erfindung vorgesehen, das Verfahren zur Trocknung des Verdampfers erst zu starten, wenn das Fahrzeug verriegelt ist.

In ähnlicher Weise kann bei Fahrzeugen, die über Sitzbelegungssensoren verfügen, vorteilhaft vorgesehen sein, das Verfahren zur Trocknung des Verdampfers erst zu starten, wenn kein Sitzplatz mehr belegt ist.

Vorteile der vorgeschlagenen Verfahren ergeben sich bei Anwendung mit jeder Klimaanlage, insbesondere in Fahrzeugen, durch eine erhebliche Komfortsteigerung und ein hohes Maß an Sicherheit durch eine wirksame Verhinderung von Scheibenbeschlag.

Bei Klimaanlagen mit einem Kombinationskreistauf zum wahlweisen Betrieb als Heizungs- oder Kühlanlage ist es weiterhin von Vorteil, dass aufgrund der Verdampfertrocknung die physikalisch mögliche Heizleistung der Wärmepumpe fast immer abrufbar ist

Bei Einbindung des Verfahrens zur Trocknung des Verdampfers in das Verfahren zur Steuerung einer Klimaanlage können alle Funktionen automatisiert werden, so dass keine Bedieneingriffe seitens des Fahrers erforderlich sind.

Es sind keine oder nur wenige zusätzliche Bauteile zur Durchführung des Verfahrens zur Trocknung des Verdampfers bzw. zur Steuerung der Klimaanlage in Kombination mit einer Verdampfertrocknung erforderlich. Daraus ergeben sich Kostenvorteile durch die Einsparung von Wärmeübertragern, Kältemittelventilen und -leitungen sowie daraus resultierende Gewichts- und Packagevorteile.

Die Initiierung des Verdampfertrocknungsprozesses erfolgt vorteilhaft automatisch bei Vorliegen solcher klimatischer Randbedingungen, die eine derartige Maßnahme erforderlich machen. Der Start des Vorgangs kann aus Komfortgründen mit einer gewissen Verzögerung oder bei Vorliegen weiterer Bedingungen erfolgen, die die Annahme zulassen, dass Fahrer und Beifahrer das Fahrzeug bereits verlassen haben.

Die Aufgabe der Erfindung wird gleichfalls gelöst durch ein Verfahren zur Steuerung einer Klimaanlage mit einem Verfahren zur Trocknung des Verdampfers. Jede moderne Klimaanlage verfogt über ein Klimagerät, das in der Lage ist, bestimmte Abläufe automatisiert durchzuführen und das Regelungsfunktionen zur Komfortsteigerung aufweist. Die Einbeziehung des erfindungsgemäßen Verfahrens zur Trocknung des Verdampfers in ein Verfahren zur Steuerung einer Klimaanlage trägt weiter dazu bei, den Komfort zu erhöhen und beispielsweise den Fahrer eines Autos von der Notwendigkeit manueller Eingriffe zu befreien.

Bezüglich der Vorrichtung zur Trocknung des Verdampfers ist der im Kältemittelkreislauf primärseitig angeordnete Verdampfer sekundärseitig mit Restwärme des Heizers beaufschlagbar. Dazu ist ein im Luftkreislauf angeordnetes Gebläse zur Umkehrung der Luftströmungsrichtung im Luftkreislauf ausgebildet. Als Gebläse werden/wird insbesondere ein zur Fondsraumdurchströmung vorgesehenes Boostergebläse und/oder ein Zusatzgebläse eingesetzt.

Der Aufwand zur Realisierung einer Verdampfertrocknung ist minimiert; insbesondere sind zusätzliche Komponenten sicher vermieden, indem der Verdampfer mit Restwärme eines ohnehin im Luftkreislauf angeordneten Heizers beaufschlagt wird. Auch sind keine zusätzlichen Kältemittelventile und -leitungen erforderlich. Der thermische Komfort im Fahrzeug wird durch den Wärmepumpenbetrieb in Kombination mit der Verdampfertrocknung deutlich verbessert. Auch ist ein hohes Maß an Sicherheit durch Verhinderung von Scheibenbeschlag durch eine automatische Taupunkt-Regelung gegeben. Durch ein Verfahren zur Steuerung der Klimaanlage können alle hier beschriebenen Funktionen automatisiert werden, so dass keine manuellen Bedieneingriffe erforderlich sind.

Nachfolgend wird ein Ausführungsbeispiel der Erfindung anhand einer Zeichnung näher erläutert. Darin zeigen:
- Fig. 1: schematisch ein Blockschaltbild einer Kühl- und Heizeinrichtung mit einem Kältemittel- und Luftkreislauf,
- Fig. 2: schematisch einen Ausschnitt aus Figur 1, insbesondere den Verdampfer mit einer sekundärseitigen Verdampfertrocknung, und
- Fig. 3: schematisch ein Blockschaltbild einer kombinierten Kühl- und Heizeinrichtung mit einem Kältemittel- und Luftkreislauf zum wahlweisen Betrieb als Heizungs- oder Kühlanlage.

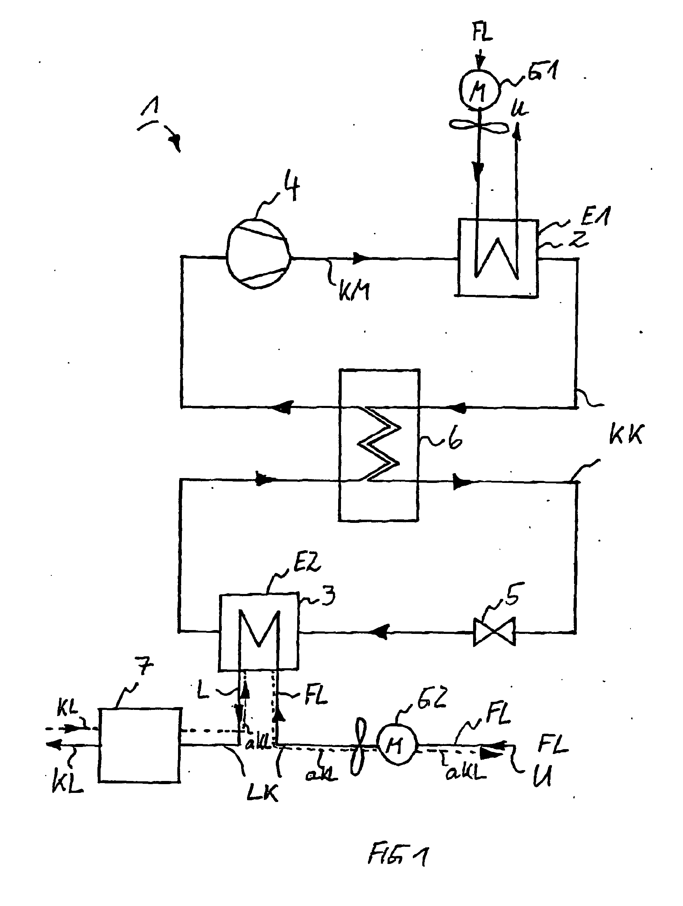

Fig. 1 zeigt ein Blockschaltbild eine kombinierte Kühl- und Heizeinrichtung 1. Nachdem eine solche Kohl- und Heizeinrichtung 1 bevorzugt zum Kühlen oder Erwärmen eines Innenraums eines Fahrzeugs verwendet wird, wird die Beschreibung für diesen bevorzugten Einsatzzweck fortgesetzt und die Kühl-und Heizeinrichtung 1 kurz als Klimaanlage 1 bezeichnet

Die Klimaanlage 1 umfasst zwei funktionsvariable Elemente E1 und E2, deren Funktionalität - Gaskühler 2 oder Verdampfer 3 - durch jeweils eine von zwei möglichen Betriebsarten der Klimaanlage 1 - Heizen bzw. Kühlen (= Normalbetrieb) - festgelegt ist. In der Figur 1 ist die Betriebsart "Kühlen" dargestellt. Dazu sind die beiden funktionsvariablen Elemente E1, E2 im Kältemittelkreislauf KK der Klimaanlage 1 angeordnet. Der Kältemittelkreislauf KK umfasst zur Klimatisierung einer in einem Luftkreislauf LK geführten Luft FL (im weiteren Frischluft FL genannt), insbesondere über die Fahrzeugumgebung zugeführte Frischluft, einen Verdichter 4, der dampfförmiges Kältemittel KM, z. B. R134a oder R744, verdichtet, so dass sich dieses dabei erhüzt. Anschließend wird das verdichtete Kältemittel KM über den Gaskühler 2 geführt Der Gaskühler 2 wird sekundärseitig von Frischluft FL, welche über ein erstes Gebläse G zugeführt wird, durchströmt. Das Kältemittel KM kühlt dabei durch die eintretende Frischluft FL ab und verflüssigt sich, wobei die Frischluft FL aufgeheizt und an die Umgebung U abgeführt wird.

Das verflüssigte Kältemittel KM wird anschließend im Kältemittelkreislauf KK einem steuerbarem Expansionsventil 5 unter Zwischenschaltung eines inneren Wärmetauschers 6 zugeführt. Das Expansionsventil 5 spritzt das abgekühlte Kältemittel KM in das im Kühlbetrieb als Verdampfer 3 betriebene funkborisvariable Element E2 ein. Dort wird das Kältemittel KM verdampft und entzieht dabei der eintretenden Frischluft FL, welche über ein zugehöriges zweites Gebläse G2 sekundärseitig dem Verdampfer 3 durchströmt, die erforderliche Verdampfungswärme, wodurch die Frischluft FL abgekühlt und als Kaltluft L einem im Luftkreislauf LK dem Verdampfer 3 nachgeschalteten Heizer 7 zugeführt wird. Dabei wird die Kaltluft L auf eine gewünschte Temperatur aufgeheizt und als klimatisierte Luft KL dem Fahrzeuginnenraum zugeführt. Das Kältemittel KM wird zur Zirkulation im Kältemittelkreislauf KK nach dem Verdampfer 3 dem inneren Wärmetauscher 6 und wieder dem Verdichter 4 und somit dem Gaskühler 2 zugeführt.

Die Klimaanlage 1 kann unter anderem in zwei Betriebsarten betrieben wer den. In einer ersten Betriebsart, die auch als Normalbetriebsart oder Kühlbetrieb bezeichnet wird, wird die Klimaanlage 1 als Kühleinrichtung betrieben. In einer zweiten Betriebsart, die auch als Heizbetrieb bezeichnet wird, wird die Klimaanlage 1 als Wärmepumpe betrieben. Das erste funktionsvariable Element E1 fungiert im Kühlbetrieb (= Normalbetriebsart der Klimaanlage 1) als Gaskühler 2 und im Heizbetrieb als Verdampfer 3. Das zweite funktionsvariable Element E2 fungiert im Kühlbetrieb (= Normalbetriebsart) als Verdampfer 3 und im Heizbetrieb als Gaskühler 2. Die funktionsvariablen Elemente E1 und E2 bilden die zentralen Komponenten im Wärmepumpenbetrieb. Weitere Bestandteile im Wärmepumpenbetrieb sind der Verdichter 4, der als Kältemittelverdichter mit variablem Hubvolumen ausgeführt ist, und das steuerbare Expansionsventil 5.

Beim Normalbetrieb der Klimaanlage 1 kann es durch einen nassen Ver dampfer 3 zu einer Verteilung der Feuchtigkeit im Fahrzeuginnenraum kommen, so dass die Scheiben beschlagen werden. Daher ist ein Verfahren zur Trocknung des Verdampfers 3 vorgesehen, bei welchem der im Kaltemittelkreislauf KK primärseitig angeordnete Verdampfer 3, insbesondere sekundärseitig mit Restwärme des Heizers 7 beaufschlagt wird. Beispielsweise wird das Verfahren zur Trocknung des Verdampfers 3 nach Abstellen des Fahrzeugs durchgeführt.

Unter Beaufschlagung des Verdampfers 3 mit Restwärme des Heizers 7 wird dabei die sekundärseitige Durchströmung des Verdampfer 3 mit heißer Luft verstanden, wobei die Durchströmungsrichtung im Luftkreislauf LK umgekehrt wird, so dass der Verdampfer 3 getrocknet wird (= gestrichelte Linie). Je nach Aufbau und Art der Klimaanlage 1 kann der Verdampfer 3 sekundärseitig als Restwärme mit der über den Heizer 7 geführten und aufgeheizten Luft aKL, insbesondere der aufgeheizten Klimatisierungsluft aKL, beaufschlagt werden.

Hierzu wird die Luftströmungsrichtung innerhalb des Luftkreislaufs LK umgekehrt, so dass klimatisierte Luft KL aus dem zu klimatisierenden Raum zuerst über den Heizer 7 und anschließend über den Verdampfer 3 geleitet wird.

Die Umkehrung der Luftströmungsrichtung im Luftkreislauf LK kann verschiedenartig bewirkt werden. Zum einen kann die Drehrichtung des im Luftkreislauf LK angeordneten zweiten Gebläses G2 umgekehrt werden. In der einfachsten Ausführungsform wird ein bereits vorhandenes Gebläse G2 benutzt. Beispielsweise wird ein zur Fondsraumdurchströmung vorgesehenes Boostergebläse verwendet Alternativ oder zusätzlich kann ein nicht näher dargestelltes weiteres Zusatzgebläse eingeschaltet werden.

Um eine möglichst gute Trocknung des Verdampfers 3 zu bewirken, wird dem Heizer 7 bereits warme Luft, insbesondere klimatisierte Luft KL, des Fahrzeuginnenraums zugeführt. Dazu wird über eine nicht näher dargestellte Lufteintrittsöffnung der Klimaanlage 1 Innenraumluft aus dem zu klimatisierenden Fahrzeuginnenraum abgeführt und im Luftkreislauf LK dem Heizer 7 zugeführt. Dort wird die klimatisierte Luft KL nochmals mittels der Restwärme aufgeheizt und als aufgeheizte Luft aKL dem Verdampfer 3 zu dessen Trocknung zugeführt. Die durch den Verdampfer 3 feuchte klimatisierte Luft KL wird an die Umgebung U abgeführt, insbesondere nach außen abgeführt, um ein Befeuchten des Fahrzeuginnenraums zu vermeiden.

Je nach Funktion und Vorgabe kann der Verdampfer 3 mit Restwärme nach einem Bedienereingriff beaufschlagt werden. Alternativ oder zusätzlich kann der Verdampfer 3 mit der Restwärme in Abhängigkeit von der Ist-Feuchtigkeit und/oder der Ist-Temperatur nach dem Verdampfer 3 beaufschlagt werden. Dazu werdenhvird die Ist-Feuchtigkeit und/oder die Ist-Temperatur nach dem Verdampfer 3 ermittelt die ermittelte Ist-Feuchtigkeit und/oder Ist-Temperatur werden/wird mit einem vorgebbaren Sollwert für die Feuchtigkeit bzw. mit einem vorgebbaren Sollwert für die Temperatur verglichen und beim Überschreiten mindestens einer der Sollwerte wird dann automatisch der Verdampfer 3 mit Restwärme des Heizers 7 beaufschlagt.

Für eine Energie sparende Trocknung des Verdampfers 3 kann dessen Beaufschlagung mit Restwärme zeitlich begrenzt werden. Alternativ oder zusätzlich kann der Verdampfer 3 in Abhängigkeit von der Kühlwassertemperatur, der momentanen Kapazität einer nicht näher dargestellten Batterie und/oder vom Ladezustand einer Batterie mit Restwärme beaufschlagt werden.

Um insbesondere nach einem Fahrzeugstillstand ein Beschlagen der Scheiben durch einen noch feuchten Verdampfer 3 zu vermeiden, wird der Ver dampfer 3 mit Restwärme nach Fahrende, insbesondere wenn das Fahrzeug abgestellt und der Motor ausgeschaltet ist, beaufschlagt Zusätzlich kann der Verdampfer 3 mit Restwärme nach Fahrende und zeitverzögert beaufschlagt werden, so dass der Fahrer des Fahrzeugs oder ein Fahrzeuginsasse nicht unnötig durch das Gebläse gestört wird. Hierzu kann die Trocknung des Verdampfers 3 insbesondere dann gestartet werden, wenn das Fahrzeug verriegelt ist und/oder wenn kein Sitzplatz mehr belegt ist.

Das hier beschriebene Verfahren zur Trocknung eines Verdampfers 3 ist vorteilhafterweise Bestandteil eines Verfahrens zur Steuerung der Klimaanlage 1. Das Trocknungsverfahren des Verdampfers 3 kann auch nachträglich in ein bereits vorhandenes Steuergerät einer Klimaanlage 1 nachgerüstet werden, insbesondere kann es auf ein Verfahren zur Regelung einer Heizleistung und einer Flash-Fog-Regelung adaptiert werden. Das Gesamtkonzept zur Steuerung der Klimaanlage 1 ist so ausgelegt, dass die maximal mögliche Heizleistung immer automatisch eingestellt ist und Scheibenbeschlag unter allen Umständen vermieden wird. Mit anderen Worten: Der Flash-Fog-Regler begrenzt bei drohendem Scheibenbeschlag die von einem Wärmepumpenregler vorgegebene Aufsteuerung eines nicht näher dargestellten Kompressor-Regelventils. Zusätzlich kann der Verdampfer 3 mittels einer Luftstromungsumkehr im Luftströmungskreislauf LK zeitweise automatisch und/oder nach einem Bedienereingriff mittels Restwärme des Heizers 7 getrocknet werden.

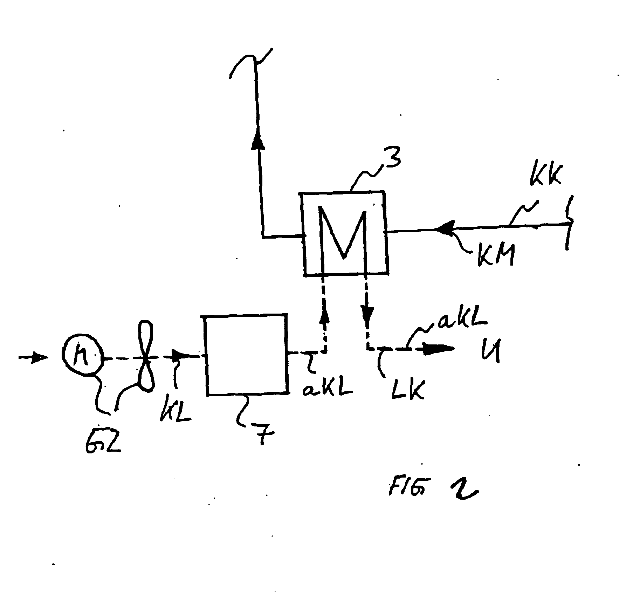

Die Strömungsumkehr im Luftkreislauf LK ist im Detail an einem Ausschnitt der Figur 1 naher in Figur 2 dargestellt. Wie oben bereits beschrieben, wird zur Trocknung des Verdampfers 2 dieser in umgekehrter Strömungsrichtung sekundärseitig mit mittels Restwärme des Heizers 7 aufgeheizter klimatisierter Luft aKL durchströmt und somit getrocknet.

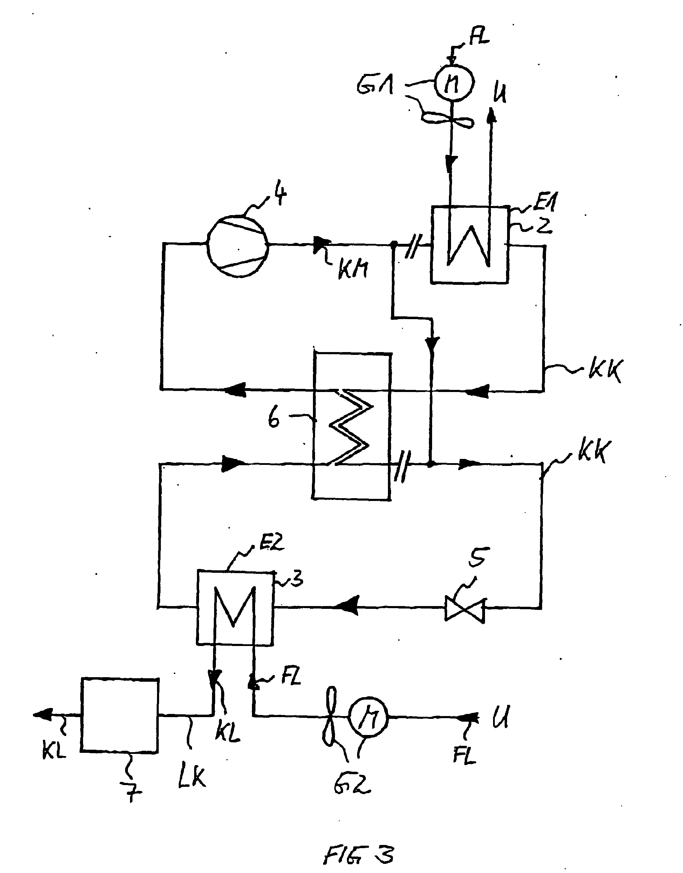

Figur 3 zeigt eine kombinierte Heiz- und Kühleinrichtung 1, welche sowohl im Wärmepumpenbetrieb als auch im Kühlbetrieb betrieben werden kann. Auch hier kann es verstärkt durch einen zu feuchten Verdampfer 3 zu einem Scheibenbeschlag im Fahrzeuginnenraum kommen, so dass der Verdampfer 3, wie oben beschrieben und in der Figur 2 näher dargestellt, durch eine Strömungsumkehr im Luftkreislauf LK mit mittels Restwärme des Heizers 7 aufgeheizter klimatisierter Luft aKL des Fahrzeuginnenraums getrocknet wird.

### Bezugszeichenliste

- 1: kombinierte Heiz- und Kühleinrichtung
- 2: Gaskühler
- 3: Verdampfer
- 4: Verdichter
- 5: Expansionsventil
- 6: innerer Wärmetauscher
- 7: Heizer

- aKL: aufgeheizte klimatisierte Luft
- E1: erstes funktionsvariables Element (= Gaskühler 2)
- E2: zweites funktionsvariables Element (= Verdampfer 3)
- FL: Frischluft
- KK: Kältemittelkreislauf
- KL: klimatisierte Luft
- KM: Kältemittel
- L: Kaltluft
- LK: Luftkreislauf
- U: Umgebung

## Patentansprüche

1. Verfahren zur Trocknung eines Verdampfers (3) einer Klimaanlage (1) in einem Fahrzeug, insbesondere nach Abstellen des Fahrzeugs, **dadurch gekennzeichnet, dass** ein in einem Kältemittelkreislauf (KK) primärseitig angeordneter Verdampfer (3) mit einer Restwärme eines Heizers (7) in Abhängigkeit von der Kühlwassertemperatur, der momentanen Kapazität einer Batterie und/oder vom Ladezustand einer Batterie beaufschlagt wird.

2. Verfahren nach Anspruch 1, bei dem der Verdampfer (3) sekundärseitig mit über den Heizer (7) geführter und aufgeheizter Luft (aKL, Restwärme) beaufschlagt wird.

3. Verfahren nach Anspruch 1 oder 2, bei dem zur Aufheizung der Luft (KL), insbesondere von klimatisierter Luft, die Luftströmungsrichtung innerhalb der Klimaanlage (1) umgekehrt wird.

4. Verfahren nach Anspruch 3, bei dem zur Umkehrung der Luftströmungsrichtung die Drehrichtung eines Gebläses (G2) umgekehrt wird.

5. Verfahren nach Anspruch 3 oder 4, bei dem zur Umkehrung der Luftströmungsrichtung die Drehrichtung eines zur Fondraumdurchströmung vorgesehenen Boostergebläses umgekehrt wird.

6. Verfahren nach einem der Ansprüche 3 bis 5, bei dem zur Umkehrung der Luftströmungsrichtung ein dafür vorgesehenes Zusatzgebläse eingeschaltet wird.

7. Verfahren nach einem der Ansprüche 3 bis 6, bei dem als Luft (KL) über eine Lufteintritts- oder Luftaustrittsöffnung der Klimaanlage (1) Innenraumluft aus einem zu klimatisierenden Raum abgeführt und dem Luftkreislauf (LK) zugeführt wird.

8. Verfahren nach einem der Ansprüche 1 bis 7, bei dem der Verdampfer (3) mit Restwärme nach einem Bedienereingriff beaufschlagt wird.

9. Verfahren nach einem der Ansprüche 1 bis 8, bei dem der Verdampfer (3) mit Restwärme in Abhängigkeit von der Ist-Feuchtigkeit und/oder der Ist-Temperatur nach dem Verdampfer (3) beaufschlagt wird.

10. Verfahren nach Anspruch 9, bei dem die Ist-Feuchtigkeit und/oder die Ist-Temperatur nach dem Verdampfer (3) ermittelt werden, die ermittelte Ist-Feuchtigkeit und/oder Ist-Temperatur mit einem vorgebbaren Sollwert für die Ist-Feuchtigkeit bzw. mit einem vorgebbaren Sollwert für die Ist-Temperatur verglichen werden bzw. wird und beim Überschreiten mindestens einer der Sollwerte der Verdampfer (3) automatisch mit Restwärme beaufschlagt wird.

11. Verfahren nach einem der Ansprüche 1 bis 10, bei dem der Verdampfer (3) mit Restwärme zeitlich begrenzt beaufschlagt wird.

12. Verfahren nach einem der Ansprüche 1 bis 11, bei dem der Verdampfer (3) mit Restwärme nach Fahrende, insbesondere wenn das Fahrzeug abgestellt und der Motor ausgeschaltet ist, beaufschlagt wird.

13. Verfahren nach Anspruch 12, bei dem der Verdampfer (3) mit Restwärme nach Fahrende und zeitverzögert beaufschlagt wird.

14. Verfahren nach Anspruch 12 oder 13, bei dem der Verdampfer (3) mit Restwärme beaufschlagt wird, wenn das Fahrzeug verriegelt ist.

15. Verfahren nach einem der Ansprüche 12 bis 14, bei dem der Verdampfer (3) mit Restwärme beaufschlagt wird, wenn kein Sitzplatz mehr belegt ist.

16. Verfahren zur Steuerung einer Klimaanlage mit einem Verfahren zur Trocknung eines Verdampfers nach einem der Ansprüche 1 bis 15.

## Claims

1. A process for drying an evaporator (3) of an air conditioning system (1) in a vehicle, in particular once the vehicle has been stopped,
**characterised in that**
residual heat from a heater (7) is applied to an evaporator (3) positioned on the primary side of a refrigerant circuit (KK) dependent on the cooling water temperature, the momentary capacity of a battery and/or the charge level of a battery.

2. A process in accordance with claim 1,
in which air (aKL, residual heat) conducted and heated by the heater (7) is applied to the evaporator (3) on the secondary side.

3. A process in accordance with claim 1 or 2,
in which the air flow direction within the air conditioning system (1) is reversed in order to heat the air (KL), in particular air conditioned air.

4. A process in accordance with claim 3,
in which the direction of rotation of a fan (G2) is reversed in order to reverse the air flow direction.

5. A process in accordance with claim 3 or 4,
in which the direction of rotation of a booster fan provided to pass air through the rear space is reversed in order to reverse the air flow direction.

6. A process in accordance with one of claims 3 to 5,
in which an additional fan is connected specifically to reverse the air flow direction.

7. A process in accordance with one of claims 3 to 6,
in which interior air is removed from a space to be air conditioned and fed to the air circuit (LK) via an air inlet or air outlet opening in the air conditioning system (1) as air (KL).

8. A process in accordance with one of claims 1 to 7,
in which residual heat is applied to the evaporator (3) following the intervention of an operator.

9. A process in accordance with one of claims 1 to 8,
in which residual heat is applied to the evaporator (3) dependent on the actual humidity and/or the actual temperature downstream of the evaporator (3).

10. A process in accordance with claim 9,
in which the actual humidity and/or the actual temperature downstream of the evaporator (3) is determined, the actual humidity and/or actual the temperature determined is compared with a predetermined reference value for the actual humidity or a predetermined reference value for the actual temperature and if at least one of the reference values is exceeded the residual heat is automatically applied to the evaporator (3).

11. A process in accordance with one of claims 1 to 10,
in which residual heat is applied to the evaporator (3) for a limited period of time.

12. A process in accordance with one of claims 1 to 11,
in which residual heat is applied to the evaporator (3) after the vehicle has stopped moving and in particular when the vehicle has stopped moving and the engine has been switched off.

13. A process in accordance with claim 12,
in which residual heat is applied to the evaporator (3) after the vehicle has stopped moving and after a time delay.

14. A process in accordance with claim 12 or 13,
in which residual air is applied to the evaporator (3) when the vehicle is locked.

15. A process in accordance with one of claims 12 to 14,
in which residual heat is applied to the evaporator (3) once none of the seats is any longer occupied.

16. A process for controlling an air conditioning system having a process for drying an evaporator in accordance with one of claims 1 to 15.

## Revendications

1. Procédé de séchage d'un évaporateur (3) d'un système de climatisation (1) dans un véhicule, en particulier après l'arrêt du véhicule,
**caractérisé en ce qu'**un évaporateur (3) disposé, côté primaire, dans un circuit de fluide frigorigène (KK) est alimenté par la chaleur résiduelle d'un dispositif de chauffage (7), en fonction de la température d'eau de refroidissement, de la capacité d'une batterie, au moment considéré, et / ou par l'état de charge d'une batterie.

2. Procédé selon la revendication 1, dans lequel l'évaporateur (3) est alimenté, côté secondaire, par de l'air (aKL, chaleur résiduelle) guidé et chauffé par le dispositif de chauffage (7).

3. Procédé selon la revendication 1 ou 2, dans lequel, pour le chauffage de l'air (KL), en particulier de l'air climatisé, la direction d'écoulement de l'air est inversée à l'intérieur du système de climatisation (1).

4. Procédé selon la revendication 3, dans lequel, pour l'inversion de la direction d'écoulement de l'air, le sens de rotation d'un ventilateur (G2) est inversé.

5. Procédé selon la revendication 3 ou 4, dans lequel, pour l'inversion de la direction d'écoulement de l'air, le sens de rotation d'un ventilateur extracteur prévu pour la circulation d'air à l'arrière de l'habitacle est inversé.

6. Procédé selon l'une quelconque des revendications 3 à 5, dans lequel, pour l'inversion de la direction d'écoulement de l'air, on fait fonctionner un ventilateur supplémentaire prévu à cet effet.

7. Procédé selon l'une quelconque des revendications 3 à 6, dans lequel, comme air (KL), de l'air de l'habitacle, provenant d'un espace à climatiser, est évacué et fourni au circuit d'air (LK) par une ouverture d'entrée d'air ou de sortie d'air du système de climatisation (1).

8. Procédé selon l'une quelconque des revendications 1 à 7, dans lequel l'évaporateur (3) est alimenté en chaleur résiduelle après une intervention de l'utilisateur.

9. Procédé selon l'une quelconque des revendications 1 à 8, dans lequel l'évaporateur (3) est alimenté en chaleur résiduelle en fonction de l'humidité réelle et / ou de la température réelle, en aval de l'évaporateur (3).

10. Procédé selon la revendication 9, dans lequel l'humidité réelle et / ou la température réelle sont déterminées en aval de l'évaporateur (3), l'humidité réelle déterminée et / ou la température réelle déterminée est ou sont comparé(e)s à une valeur de consigne prédéfinissable, pour l'humidité réelle, ou à une valeur de consigne prédéfinissable, pour la température réelle, et, en cas de dépassement de la limite supérieure d'au moins l'une des valeurs de consigne, l'évaporateur (3) est alimenté automatiquement en chaleur résiduelle.

11. Procédé selon l'une quelconque des revendications 1 à 10, dans lequel l'évaporateur (3) est alimenté en chaleur résiduelle, de façon limitée dans le temps.

12. Procédé selon l'une quelconque des revendications 1 à 11, dans lequel l'évaporateur (3) est alimenté en chaleur résiduelle après la fin d'un trajet, en particulier lorsque le véhicule est arrêté et que le moteur est coupé.

13. Procédé selon la revendication 12, dans lequel l'évaporateur (3) est alimenté en chaleur résiduelle après la fin d'un trajet et de façon différée dans le temps.

14. Procédé selon la revendication 12 ou 13, dans lequel l'évaporateur (3) est alimenté en chaleur résiduelle lorsque le véhicule est fermé à clé.

15. Procédé selon l'une quelconque des revendications 12 à 14, dans lequel l'évaporateur (3) est alimenté en chaleur résiduelle quand plus aucune place assise n'est occupée.

16. Procédé de régulation d'un système de climatisation comprenant un procédé de séchage d'un évaporateur selon l'une quelconque des revendications 1 à 15.
